# EUROPÄISCHE PATENTSCHRIFT

(11) **EP 3 384 309 B1**
(45) Veröffentlichungstag und Bekanntmachung des Hinweises auf die Patenterteilung: **28.08.2019**
(21) Anmeldenummer: 16805413.8
(22) Anmeldetag: 01.12.2016
(51) Int. Cl.: G01S 5/04, G01S 5/02, G01S 5/14, G05B 19/418, B66B 1/34, B66B 19/00

(54) **ÜBERWACHEN UND/ODER PROTOKOLLIEREN EINER POSITION EINES WERKZEUGS IN EINEM FAHRSTUHLSCHACHT**
MONITORING AND/OR LOGGING A POSITION OF A TOOL WITHIN AN ELEVATOR SHAFT
SURVEILLANCE ET/OU ETABLISSEMENT DE PROTOCOLE D'UNE POSITION D'UN OUTIL DANS UNE CAGE D'ASCENSEUR

(30) Priorität: 02.12.2015 EP 15197608
(43) Veröffentlichungstag der Anmeldung: 10.10.2018
(73) Patentinhaber: Inventio AG, 6052 Hergiswil (CH)
(72) Erfinder: STUDER, Christian, 6010 Kriens (CH); ZIMMERLI, Philipp, 4624 Härkingen (CH); KUSSEROW, Martin, 6005 Luzern (CH)
(86) Internationale Anmeldenummer: PCT/EP2016/079503
(87) Internationale Veröffentlichungsnummer: WO 2017/093438

(56) Entgegenhaltungen:
- EP-A2- 1 881 340
- EP-A2- 2 138 920
- DE-A1-102012 110 467

## Beschreibung

Die vorliegende Erfindung betrifft ein System und ein Verfahren zum Überwachen und/oder Protokollieren einer Position eines Werkzeugs in einem Fahrstuhlschacht.

Bei der Montage und Wartung eines Fahrstuhlsystems kann es notwendig sein, die von einem Monteur durchgeführten Arbeitsschritte zu protokollieren. Dies kann beispielsweise von einem elektronischen Positionsbestimmungssystem unterstützt werden, das beispielsweise die Position eines vom Monteur benutzten Werkzeugs überwacht.

Im Allgemeinen werden bei der Montage von größeren Industrieanlagen Lage- und Positionsbestimmungssysteme eingesetzt, mit denen die korrekte Installation von Komponenten der Anlage überwacht werden kann. Solche Systeme können beispielsweise ermitteln, ob eine bestimmte Komponente der Anlage an der richtigen Stelle mit der Anlage verschraubt wurde.

Bei der Montage eines Fahrstuhls wird die Verschienung des Fahrstuhls beginnend im untersten Stockwerk normalerweise nach oben hin montiert. Der Monteur steht dabei in der Regel auf dem Dach der Fahrstuhlkabine. Die Fahrstuhlkabine wird gleich nach der Montage der untersten Verschienung im Fahrstuhlschacht installiert und zur Installation der Verschienung in den höheren Stockwerken nach oben gefahren.

Die Geometrie des Fahrstuhlschachts, die den Fahrstuhlschacht in Höhenrichtung vollständig blockierende Fahrstuhlkabine und die große Menge an seitlich im Fahrstuhlschacht befestigten Metallkomponenten (wie etwa die Verschienung) können den Einsatz von herkömmlichen Lage- und Positioniersystemen erschweren oder sogar unmöglich machen.

Die US 2010/0057243 A1 betrifft ein Verfahren zum Optimieren eines Montageprozesses, bei dem ein Werkzeug eingesetzt wird, dessen Position mit Gyroskopen und Beschleunigungssensoren bestimmt werden kann.

Die DE 2012 219 871 A1 betrifft ein Verfahren zum Protokollieren von Verschraubungen, bei dem mithilfe von Bildinformationen eine Lokalisierung und Protokollierung einer Schraubposition durchgeführt wird.

Die EP 2 138 920 A2 betrifft ein System und ein Verfahren zum Lokalisieren und Protokollieren von Fertigungsschritten bei einem Flugzeug. Bei dem Verfahren wird eine Position, an der ein Fertigungsschritt ausgeführt wurde, erfasst und in einem Umgebungsmodell dargestellt.

Die EP 1 881 340 A2 betrifft ein System und ein Verfahren zur Ortung eines Werkzeugs. Bei dem Verfahren wird eine Freifeldortung zur Erfassung der absoluten Position des Werkzeugs und eine Relativortung zur relativen Positionsbestimmung des Werkzeugs durch Verfolgung der Bewegung des Werkzeugs relativ zu einer bekannten Referenzposition durchgeführt. Das Ergebnis der relativen Positionsbestimmung wird mit dem Ergebnis der Freifeldortung kombiniert, um die Position des Werkzeugs zu bestimmen.

Es kann ein Bedarf bestehen, während der Installation, Montage und Wartung eines Fahrstuhls Arbeitsschritte automatisch zu protokollieren und/oder dazu eine Position eines Werkzeugs im Fahrstuhlschacht auf einfache Art und Weise genau zu ermitteln.

Ein solcher Bedarf kann durch den Gegenstand der unabhängigen Ansprüche gedeckt werden. Vorteilhafte Ausführungsformen sind in den abhängigen Ansprüchen definiert.

Mögliche Merkmale und Vorteile von Ausführungsformen der Erfindung können unter anderem und ohne die Erfindung einzuschränken als auf nachfolgend beschriebenen Ideen und Erkenntnissen beruhend angesehen werden.

Ein Aspekt der Erfindung betrifft ein Überwachungs- und Protokollierungssystem zum Überwachen und/oder Protokollieren einer Position eines Werkzeugs in einem Fahrstuhlschacht. Der Fahrstuhlschacht kann ein länglicher vertikaler Schacht in einem Gebäude sein, in dem ein Fahrstuhlsystem installierbar ist. Ein Fahrstuhlsystem kann eine Fahrstuhlkabine umfassen, die entlang einer Verschienung an den Wänden des Fahrstuhlschachts vertikal bewegbar ist. Die Fahrstuhlkabine bzw. der Fahrstuhl oder Aufzug kann dazu ausgeführt sein, Personen und/oder Material zu befördern.

Das Werkzeug kann als ein elektrisch, pneumatisch oder hydraulisch angetriebenes Werkzeug, beispielsweise als ein elektrischer Schraubendreher ausgeführt sein. Es ist aber auch möglich, dass das Werkzeug als ein handbetätigtes Werkzeug, beispielsweise in Form eines Drehmomentschlüssels ausgeführt ist.

Gemäß einer Ausführungsform der Erfindung umfasst das System ein Positionsmesssystem zum Messen einer Position des Werkzeugs relativ zu einer Fahrstuhlkabine; ein Höhenmesssystem zum Messen einer Höhe der Fahrstuhlkabine in dem Fahrstuhlschacht; und ein Auswertesystem, das dazu ausgeführt ist, Messdaten von dem Positionsmesssystem und dem Höhenmesssystem zu empfangen und daraus eine Position des Werkzeugs relativ zu dem Fahrstuhlschacht zu bestimmen.

Das Positionsmesssystem kann einen oder mehrere Sensoren und auch zugehörige Auswerteelektronik umfassen. Sensoren des Positionsmesssystems und deren zugehörige Auswerteelektronik können an dem Werkzeug, der Fahrstuhlkabine und/oder im Fahrstuhlschacht angebracht bzw. darin integriert sein. Aus den Messdaten des Positionsmesssystems kann eine dreidimensionale Position des Werkzeugs (die etwa mit einem dreidimensionalen Vektor angegeben werden kann) ermittelt werden. Diese Relativposition des Werkzeugs kann relativ zu einem Bezugspunkt der Fahrstuhlkabine angegeben sein (beispielsweise der Mitte oder einer Ecke des Kabinendachs der Fahrstuhlkabine).

Das Höhenmesssystem kann mehrere Höhenmesser bzw. -sensoren und deren zugehörige Auswerteelektronik umfassen. Diese Höhenmesser und deren zugehörige Auswerteelektronik können an dem Werkzeug, der Fahrstuhlkabine und/oder im Fahrstuhlschacht angebracht bzw. darin integriert sein. Aus den Messdaten des Höhenmesssystems kann ein vertikaler Abstand (eine Höhe) von dem Bezugspunkt der Fahrstuhlkabine zu einem Bezugsniveau im Fahrstuhlschacht (beispielsweise der Boden oder die Decke des Fahrstuhlschachts) ermittelt werden.

Das Auswertesystem kann Auswerteelektronik der Sensoren des Positionsmesssystems und/oder Höhenmesssystems umfassen und/oder kann eine weitere Auswerteeinheit umfassen, die mit den Sensoren bzw. deren Auswerteelektronik mit Datenkommunikationsverbindungen verbunden ist. Beispielsweise kann das Auswertesystem und/oder die Auswerteeinheit ein Rechner und mobiles Gerät sein, das beispielsweise von einem Monteur mitgeführt wird. Es ist auch möglich, dass das Auswertesystem und/oder die Auswerteeinheit in das Werkzeug integriert sind.

Das Auswertesystem bzw. die Auswerteeinheit empfängt von den verschiedenen Sensoren deren Messdaten, die bereits von etwaigen Auswerteelektroniken aufbereitet sein können, und berechnet dann aus diesen Daten die Position des Werkzeugs relativ zu dem Bezugsniveau bzw. einem Bezugspunkt des Fahrstuhlschachts. Beispielsweise kann der mit dem Höhenmesssystem ermittelte vertikale Abstand zu dem dreidimensionalen Vektor der Relativposition des Werkzeugs bezüglich der Fahrstuhlkabine addiert werden.

Das Überwachungs- und Protokollierungssystem kann dazu verwendet werden, zu überwachen, an welchen Positionen im Fahrstuhl Baukomponenten des Fahrstuhlsystems durch das Werkzeug bearbeitet wurden. Beispielsweise kann das Werkzeug ein elektrischer Schraubendreher sein und/oder das Überwachungs- und Protokollierungssystem kann dazu verwendet werden, zu protokollieren, an welchen Positionen Schrauben durch den elektrischen Schraubendreher angezogen wurden.

Ein weiterer Aspekt der Erfindung betrifft ein Verfahren zum Überwachen und/oder Protokollieren einer Position eines Werkzeugs in einem Fahrstuhlschacht. Dieses Verfahren kann automatisch von dem System zum Überwachen und/oder Protokollieren einer Position eines Werkzeugs ausgeführt werden. Beispielsweise kann das Auswertesystem einen Computer und/oder eine eingebettete Rechnereinheit ("embedded system") umfassen, auf dem Software ausgeführt wird, die in der Lage ist, das Verfahren auszuführen. Es ist zu verstehen, dass Merkmale des Verfahren auch Merkmale des Systems sein können und umgekehrt.

Gemäß einer Ausführungsform der Erfindung umfasst das Verfahren: Messen einer Position des Werkzeugs relativ zu einer Fahrstuhlkabine mit einem Positionsmesssystem; Messen einer Höhe der Fahrstuhlkabine in dem Fahrstuhlschacht mit einem Höhenmesssystem und Bestimmen einer Position des Werkzeugs relativ zu dem Fahrstuhlschacht basierend auf den genannten Messdaten des Positionsmesssystems und des Höhenmesssystems mit einem Auswertesystem. Mit anderen Worten kann das Auswertesystem Messdaten von den Sensoren des Positionsmesssystems und des Höhenmesssystems abfragen, diese Messdaten in die Relativposition des Werkzeugs relativ zur Fahrstuhlkabine und die Höhe der Fahrstuhlkabine relativ zu einem Bezugsniveau zum Fahrstuhlschacht umrechnen und aus der Relativposition und der Höhe (etwa durch Addieren) die Absolutposition des Werkzeugs im Fahrstuhlschacht berechnen.

Gemäß einer Ausführungsform der Erfindung umfasst das Positionsmesssystem wenigstens drei, vier oder mehr an unterschiedlichen Positionen an der Fahrstuhlkabine angebrachte Signalsender und einen am Werkzeug angebrachten Signalstärkesensor. Diese Signalsender können beispielsweise Radio-Transmitter in der Form von Bluetooth-Low-Energy-Transmittern sein, die an den Ecken des Kabinendachs der Fahrstuhlkabine angebracht sind. Der Signalstärkesensor kann in diesem Fall ein Bluetooth-Empfänger sein, der in das Werkzeug integriert ist. Das Auswertesystem kann dazu ausgeführt sein, aus den durch den Signalstärkesensor gemessenen Signalstärken der Signalsender die Position des Werkzeugs relativ zu der Fahrstuhlkabine zu bestimmen. Es ist auch möglich, dass auf dem Werkzeug ein Signalsender und an der Fahrstuhlkabine entsprechende Signalstärkesensor angeordnet sind.

Gemäß einer Ausführungsform der Erfindung sind die Signalsender auf einem Kabinendach der Fahrstuhlkabine angebracht. Beispielsweise können die Signalsender an drei oder vier Ecken des Kabinendachs angebracht sein.

Gemäß einer Ausführungsform der Erfindung sind von dem Signalstärkesensor empfangene Signale der Signalsender Radiosignale, Ultraschallsignale, Bluetoothsignale und/oder Infrarotsignale. Die Signale verschiedener Signalsender können unterschiedlich moduliert sein und/oder unterschiedliche Frequenz aufweisen, so dass sie der Signalstärkesensor voneinander trennen kann. Beispielsweise kann das Werkzeug, wie etwa ein elektrischer Schraubendreher, mit einer Sensoreinheit ausgestattet sein, das als Signalstärkesensor ein RSSI-Messgerät (received signal strength indicator) umfasst, der beispielsweise die Signalstärken von Sendern eines kabellosen Kommunikationsnetzwerks ermitteln kann. Mit anderen Worten können Sender/Empfänger bzw. Transmitter eines kabellosen Kommunikationsnetzwerks (Bluetooth, Infrarot etc.) als Signalsender verwendet werden. Die Sensoreinheit des Werkzeugs kann die RSSI-Werte der Transmitter auf dem Kabinendach messen und diese zur Berechnung der Bewegung des Werkzeugs relativ zum Kabinendach verwenden.

Alternativ zum beschriebenen Verfahren zum Messen der Position des Werkszeugs relativ zur Fahrstuhlkabine kann auch ein auf Ultraschall basierendes Verfahren verwendet werden. Dazu kann beispielsweise am Werkzeug ein Ultraschallsender und an mindestens drei definierten Stellen an der Fahrstuhlkabine jeweils ein Ultraschallempfänger angeordnet sein. Aus den Laufzeiten der Ultraschallwellen vom Sender zu den Empfängern kann jeweils der Abstand des Senders zu den Empfängern und so die Position des Senders relativ zu den Empfängern und so auch relativ zur Fahrstuhlkabine bestimmt werden.

Gemäß einer Ausführungsform der Erfindung umfasst das Positionsmesssystem eine Inertialmesseinheit, die dazu ausgeführt ist, eine Beschleunigung und/oder eine räumliche Orientierung des Werkzeugs relativ zur Fahrstuhlkabine zu bestimmen. Die Inertialmesseinheit kann beispielsweise in das Werkzeug integriert sein. Eine Beschleunigung und/oder eine räumliche Orientierung kann mit einem dreidimensionalen Vektor beschrieben werden. Die Inertialmesseinheit, die am Werkzeug angebracht oder in das Werkzeug integriert sein kann, kann die räumliche Orientierung und/oder Beschleunigung des Werkzeugs in X-, Y- und Z-Richtung und/oder einen Winkel des Werkzeugs gegenüber der Horizontalen bestimmen. Insbesondere die räumliche Orientierung und/oder der Winkel erlauben es, zu erfassen, wie das Werkzeug gegenüber den Wänden des Fahrstuhlschachts positioniert ist (Werkzeug ist gegen die Vorderwand, die Rückwand, die linke oder rechte Seitenwand, die Bodenfläche oder die Deckenfläche des Fahrstuhlschachts gerichtet).

Die Inertialmesseinheit kann einen Beschleunigungssensor zum Messen von Beschleunigungen und/oder ein Gyroskop zum Messen der räumlichen Orientierung umfassen. Die Inertialmesseinheit kann weiter einen Magnetfeldsensor umfassen, mit dem auch eine Lage- bzw. Orientierungsveränderung in einem homogenen Magnetfeld (beispielsweise dem Erdmagnetfeld) ermittelt werden kann.

Das Auswertesystem kann dazu ausgeführt sein, basierend auf der Position des Werkzeugs relativ zum Fahrstuhlschacht und der Beschleunigung und/oder der räumlichen Orientierung des Werkzeugs relativ zur Fahrstuhlkabine eine räumliche Orientierung des Werkzeugs relativ zum Fahrstuhlschacht zu bestimmen. Wenn das Auswertesystem die Absolutposition des Werkzeugs im Fahrstuhlschacht mit einem dreidimensionalen Modell des Fahrstuhlsystems im Fahrstuhlschacht vergleicht, kann die räumliche Orientierung des Werkzeugs von dem Auswertesystem dazu verwendet werden, zu bestimmen, gegen welche Baukomponente das Werkzeug gerade gerichtet ist.

Weiter kann die Beschleunigung des Werkzeugs dazu verwendet werden, die Bestimmung der Relativposition des Werkzeugs zu verbessern.

Gemäß einer Ausführungsform der Erfindung umfasst das Höhenmesssystem einen Kabinen-Höhenmesser, der an der Fahrstuhlkabine angebracht ist. Der Kabinen-Höhenmesser kann auf dem Kabinendach der Fahrstuhlkabine angebracht sein. Der Höhenabstand des Kabinen-Höhenmessers zu den Signalsendern des Positionsmesssystems kann fest vorgegeben sein und von dem Auswertesystem zum Bestimmen der Position des Werkzeugs relativ zur Fahrstuhlkabine verwendet werden.

Gemäß einer Ausführungsform der Erfindung umfasst das Höhenmesssystem einen Schacht-Höhenmesser, der an dem Fahrstuhlschacht angebracht ist, beispielsweise an einer Wand, dem Boden oder der Decke des Fahrstuhlschachts. Der Schacht-Höhenmesser kann beim obersten Stockwerk des Fahrstuhlschachts angebracht sein, da in diesem Fall immer eine freie Sichtlinie zu einer Auswerteeinheit des Auswertesystems auf dem Kabinendach besteht.

Insgesamt können zwei Höhenmesser im Fahrstuhlschacht im höchsten Stockwerk und auf dem Kabinendach der Fahrstuhlkabine angebracht sein.

Gemäß einer Ausführungsform der Erfindung umfasst das Höhenmesssystem einen Werkzeug-Höhenmesser, der an dem Werkzeug angebracht ist. Der Werkzeug-Höhenmesser kann in das Werkzeug integriert sein und/oder kann Bestandteil der Inertialmesseinheit sein. Mit den Messdaten des Werkzeug-Höhenmessers kann die Berechnung der Absolutposition des Werkzeugs im Fahrstuhlschacht unterstützt bzw. verbessert werden.

Gemäß einer Ausführungsform der Erfindung umfassen der Kabinen-Höhenmesser, der Schacht-Höhenmesser und/oder der Werkzeug-Höhenmesser jeweils einen Luftdrucksensor. Für eine Höhenrelativmessung kann eine Genauigkeit bis zu wenigen dm erreicht werden, wenn auch Temperatur und/oder Luftfeuchtigkeit berücksichtigt sind. Es ist aber auch möglich, dass der Kabinen-Höhenmesser, der Schacht-Höhenmesser und/oder der Werkzeug-Höhenmesser auf Laser-, Radar- und/oder Sonar-Abstandsmessungen basieren. Beispielsweise kann der Kabinen-Höhenmesser eine Entfernung des Kabinendachs zu der Decke des Fahrstuhlschachts bestimmen.

Auch kann die Höhe des Werkzeugs mittels des Werkzeug-Höhenmessers und eines Schacht-Höhenmessers als Referenz-Höhenmesser, der in der Nähe des höchsten Stockwerks angebracht sein kann, ermittelt werden.

Die Höhe der Fahrstuhlkabine kann auch mit anderen bekannten Positionsmesssystemen bestimmt werden, wie beispielsweise mit einem Absolutpositionsmesssystem, wie es im späteren Betrieb des Fahrstuhlsystems verwendet wird.

Gemäß einer Ausführungsform der Erfindung umfasst das System eine an dem Werkzeug angebrachte Kamera. Diese Kamera, die in der Regel Baukomponenten des Fahrstuhlsystems aufnehmen kann, auf die das Werkzeug gerichtet ist und/oder die von dem Werkzeug bearbeitet werden, kann Bilder und/oder Filme an das Auswertesystem über eine Datenkommunikationsverbindung verschicken.

Die am Werkzeug angebrachte Kamera kann die Lokalisierung des Werkzeugs weiter unterstützen bzw. verbessern. Beispielsweise können die Kamerabilder von dem Auswertesystem ausgewertet werden und basierend auf einem Konstruktionsplan bzw. einem dreidimensionalen Modell des Fahrstuhlsystems ermittelt werden, welche Baukomponente des Fahrstuhlssystems von der Kamera gerade anvisiert wird (beispielsweise kann ermittelt werden, ob die Kamera bzw. das Werkzeug auf eine Schraube gerichtet ist, auf die linke oder rechte Schraube einer Mehrzahl von Schrauben gerichtet ist usw.).

Das Auswertesystem kann dazu ausgeführt sein, ein Bild der Kamera auszuwerten und eine Baukomponente eines Fahrstuhlsystems zu erkennen, auf die die Kamera gerichtet ist. Beispielsweise kann das Auswertesystem ermitteln, dass in einer bestimmten Position innerhalb des Bildes die Baukomponente (beispielsweise eine Schraube) abgebildet ist.

Weiter kann das Auswertesystem dazu ausgeführt sein, basierend auf der Position und/oder einer räumlichen Orientierung des Werkzeugs relativ zum Fahrstuhlschacht und der erkannten Baukomponente eine Baukomponente in einem dreidimensionalen Fahrstuhlmodell zu ermitteln. Beispielsweise kann aus dem dreidimensionalen Fahrstuhlmodell ein vordefiniertes Volumen vor dem Werkzeug (etwa ein Quader und/oder Würfel mit Seitenlängen beispielsweise kleiner 10 cm) ausgeschnitten werden und in diesem Volumen bestimmte Baukomponenten (wie etwa Schrauben) gesucht werden.

Weiter kann das Auswertesystem dazu ausgeführt sein, aus der ermittelten Baukomponente des Modells eine korrigierte Position und/oder korrigierte räumliche Orientierung des Werkzeugs zu bestimmen. Beispielsweise kann angenommen werden, dass eine von dem Werkzeug bearbeitete Baukomponente sich genau an einer Spitze (einem Bezugspunkt) des Werkzeugs befindet, auch wenn sie in dem oben genannten vordefinierten Volumen lediglich am Rand gefunden wurde.

Gemäß einer Ausführungsform der Erfindung umfasst das System einen mit einer Stromversorgung des Werkzeugs verbundenen Stromsensor. Das Auswertesystem kann dazu ausgeführt sein, aus Messdaten des Stromsensors zu bestimmen, wann und/oder in welcher Weise das Werkzeug aktiviert worden ist. Die Sensoreinheit am Werkzeug kann auch dazu ausgeführt sein, den aktuellen Stromverbrauch des Werkzeugs (beispielsweise aus einer Stromversorgung, wie etwa einem in das Werkzeug integrierten Akkumulator) zu ermitteln. Diese Information kann dazu verwendet werden, zu bestimmen, wann das Werkzeug aktiviert wird. Auch können Messungen des Stroms dazu verwendet werden, zu ermitteln, wie stark eine Schraube angezogen wurde.

Es ist auch möglich, dass das Werkzeug selbständig verschiedene Größen erfasst und an das Auswertesystem weiterleitet. Wenn das Werkzeug beispielsweise ein elektrischer Schraubendreher ausgeführt ist, kann es beispielsweise eine Anzahl Umdrehungen, eine Winkelposition, ein Drehmoment und eine Vorspannung der Schraube beim Abschluss des Einschraubens einer Schraube erfassen und an das Auswertesystem weiterleiten.

Gemäß einer Ausführungsform der Erfindung ist das Auswertesystem dazu ausgeführt, die Position und/oder eine räumliche Orientierung des Werkzeugs relativ zum Fahrstuhlschacht, bei dem eine Aktivierung des Werkzeugs erfolgt ist, beispielsweise in einer Datei und/oder Datenbank zu protokollieren. Auch beispielsweise ein mit der Kamera an dieser Position aufgenommenes Bild kann in der Datei abgelegt werden. Auch können Messwerte des Stromsensors, die an dieser Position aufgenommen wurden, in dieser Datei abgelegt werden. Das System kann einen Monteur oder Wartungstechniker beim Ausfüllen von Protokollen unterstützen und kann so zu einer Zeitersparnis bei der Wartung oder Montage führen. Das System kann auch von einem Inspektor für die Abnahme des Fahrstuhls verwendet und auch dabei zu einer deutlichen Zeitersparnis bei der Abnahme führen.

Gemäß einer Ausführungsform der Erfindung ist das Auswertesystem dazu ausgeführt, ein dreidimensionales Fahrstuhlmodell mit protokollierten Positionen des Werkzeugs zu vergleichen und zu ermitteln, ob Baukomponenten, bei denen das Werkzeug aktiviert werden sollte, nicht bearbeitet wurden. Beispielsweise kann elektronisch ermittelt werden, ob vergessen wurde, bestimmte Schrauben anzuziehen. Alternativ oder zusätzlich dazu können die von dem System ermittelten Positionen, an denen Baukomponenten bearbeitet wurden, zusammen mit einem Konstruktionsplan bzw. einem dreidimensionalen Modell des Fahrstuhlschachts und/oder des Fahrstuhlsystems angezeigt werden und/oder dann beispielsweise visuell mit dem dreidimensionalen Modell verglichen werden.

Es wird daraufhingewiesen, dass einige der möglichen Merkmale und Vorteile der Erfindung hierin mit Bezug auf unterschiedliche Ausführungsformen beschrieben sind. Ein Fachmann erkennt, dass die Merkmale in geeigneter Weise kombiniert, angepasst oder ausgetauscht werden können, um zu weiteren Ausführungsformen der Erfindung zu gelangen.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt schematisch ein Werkzeug für ein Überwachungs- und Protokollierungssystem gemäß einer Ausführungsform der Erfindung.
Fig. 2 zeigt schematisch einen Fahrstuhlschacht mit Sensoren für ein Überwachungs- und Protokollierungssystem gemäß einer Ausführungsform der Erfindung.
Fig. 3 zeigt schematisch ein Überwachungs- und Protokollierungssystem gemäß einer Ausführungsform der Erfindung.
Fig. 4 zeigt ein Flussdiagramm für ein Verfahren zum Überwachen und/oder Protokollieren einer Position eines Werkzeugs in einem Fahrstuhlschacht gemäß einer Ausführungsform der Erfindung.

Die Figuren sind lediglich schematisch und nicht maßstabsgetreu. Gleiche Bezugszeichen bezeichnen in den verschiedenen Figuren gleiche oder gleichwirkende Merkmale.

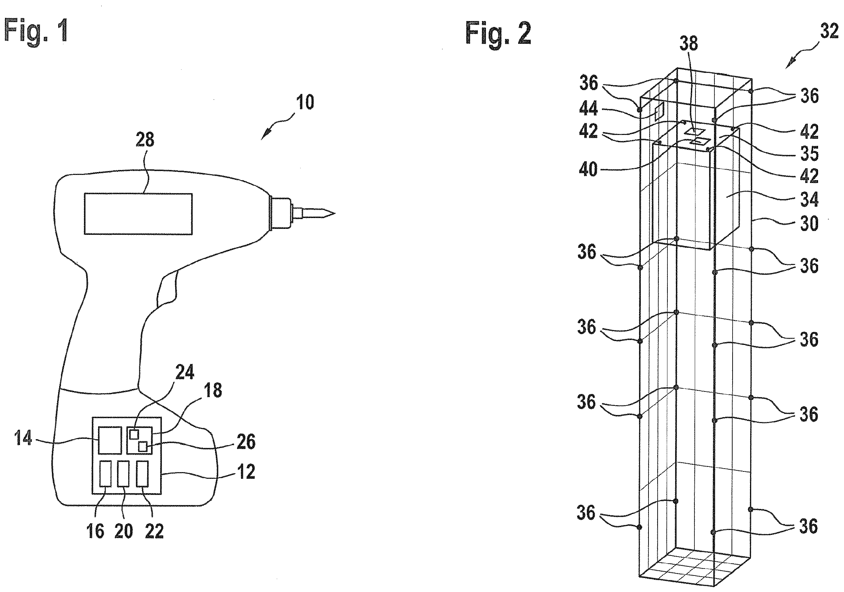

Fig. 1 zeigt ein Werkzeug 10 in der Form eines elektrischen Schraubendrehers, mit dem beispielsweise Schrauben zum Befestigen einer Verschienung eines Fahrstuhlsystems an den Wänden eines Fahrstuhlschachts angezogen werden können.

Das Werkzeug 10 umfasst eine in das Werkzeug integrierte Sensoreinheit 12, die neben einer Auswerteelektronik 14 einen Signalstärkesensor 16, eine Inertialmesseinheit 18, einen Höhenmesser 20 und einen Stromsensor 22 umfasst. Der Höhenmesser 20 und/oder der Stromsensor 22 sind optional.

Der Signalstärkesensor 14 ist dazu ausgeführt, Signale (etwa Radio-, Infrarot-, Ultraschall-Signale) von einem Signalsender 42 (siehe Fig. 2) zu empfangen und eine Signalstärke dieses Signals zu ermitteln. Aus mehreren Signalen von Signalsendern an verschiedenen Orten kann die Auswerteelektronik 14 eine Entfernung des Werkzeugs 10 von den Signalsendern ermitteln und daraus eine Position des Werkzeugs 10 relativ zu diesen Signalsendern bestimmen.

Die Inertialmesseinheit 18 umfasst einen Beschleunigungssensor 24 und ein Gyroskop 26. Mit dem Beschleunigungssensor 24 können Beschleunigungsmessdaten des Werkzeugs 10 erzeugt werden. Das Gyroskop 26 dient zum Ermitteln der räumlichen Orientierung des Werkzeugs 10. Weiter kann die Inertialmesseinheit 18 einen Magnetfeldsensor umfassen, mit dem eine der räumlichen Orientierung des Werkzeugs 10 mittels des Erdmagnetfelds ermittelt werden kann.

Mit dem Höhenmesser 20, der beispielsweise auf Luftdruckmessungen basieren kann, kann eine absolute Höhe des Werkzeugs 10 bestimmt werden. Durch Vergleich mit einer absoluten Höhe eines Bezugspunkts beispielsweise in einem Fahrstuhlschacht kann eine Höhe des Werkzeugs 10 bezüglich des Bezugspunkts bestimmt werden.

Der Stromsensor 22 ist mit einer Stromversorgung des Werkzeugs 10 (beispielsweise einem Akkumulator) verbunden und kann ermitteln, ob und/oder wie lange das Werkzeug 10 aktiviert ist (Strom an/aus). Über eine Messung der Stromhöhe kann beispielsweise zusätzlich ermittelt werden, wie stark eine Schraube durch das Werkzeug 10 angezogen wurde.

Weiter umfasst das Werkzeug 10 eine integrierte Kamera 28, mit der ein Arbeitsbereich vor der Kamera 28 überwacht werden kann und/oder von diesem Arbeitsbereich Bilder aufgenommen werden können.

Alternativ kann die Sensoreinheit 12 und/oder die Kamera 28 lediglich am Werkzeug 10 angebracht sein und/oder beispielsweise von dem Werkzeug 10 lösbar sein.

Die Fig. 2 zeigt einen Fahrstuhlschacht 30, in dem ein Fahrstuhlsystem 32 (bei der Montage zumindest teilweise) installiert ist. Das Fahrstuhlsystem 32 umfasst eine Fahrstuhlkabine 34, die im Fahrstuhlschacht 30 auf und ab bewegt werden kann. Bei der Wartung und/oder Montage des Fahrstuhlsystems 32 kann sich ein Monteur auf dem Kabinendach 35 der Fahrstuhlkabine 34 befinden, dabei das Werkzeug 10 in der Hand halten und Baukomponenten 36 des Fahrstuhlsystems 32 bearbeiten. In der Fig. 2 sind beispielhaft Schrauben einer Verschienung als Baukomponenten 36 dargestellt.

Auf dem Kabinendach 35 der Fahrstuhlkabine 34 befinden sich eine Auswerteeinheit 38 (beispielsweise ein Laptop oder mobiles Gerät, Smartphone, Tablet-Computer), ein Kabinen-Höhenmesser 40 und vier an den Ecken des Kabinendachs 35 angebrachte Signalsender 42. Auf Höhe des höchsten Stockwerks ist an einer Wand des Fahrstuhlschachts 30 ein weiterer Höhenmesser 44 angebracht. In die Höhenmesser 40, 44 kann eine Auswerteelektronik integriert sein.

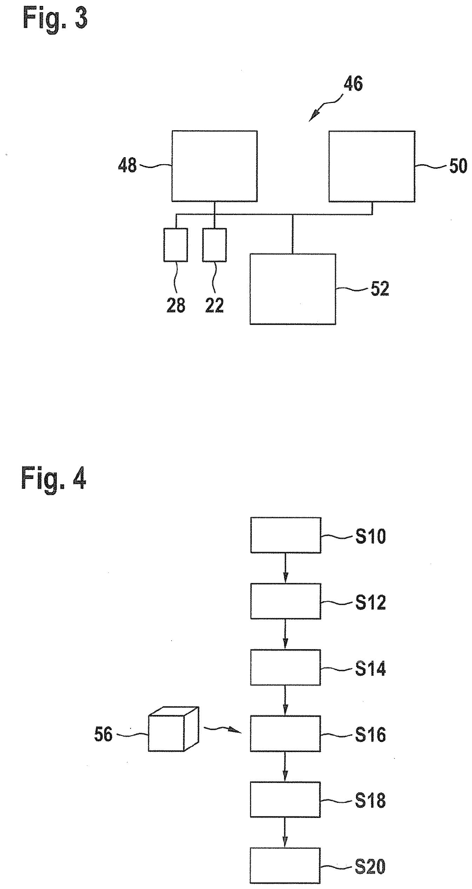

Es kann auch möglich sein, dass eine Auswerteeinheit 52 (siehe Fig. 3) als Elektronikkomponente in die Sensoreinheit 12 des Werkzeugs integriert ist.

Die Auswerteeinheit 38 ist nun dazu ausgeführt, von dem Werkzeug 10 bzw. dessen Sensoreinheit 12 und den Höhenmessern 40, 44 Messdaten zu empfangen und diese weiterzuverarbeiten. Dies kann beispielsweise über eine drahtlose Datenkommunikationsverbindung erfolgen. Die Auswerteelektronik 14 des Werkzeugs 10 kann von den einzelnen Sensoren bzw. Sensoreinheiten 16, 18, 20, 22, 24, 26 des Werkzeugs und der Kamera 24 des Werkzeugs Messdaten bzw. Bilder empfangen und diese Messdaten an die Auswerteeinheit 38 über die Datenkommunikationsverbindung versenden.

Auch kann die Auswerteeinheit 38 die Signalsender 42 ansteuern und diese dazu veranlassen, ein Signal abzugeben. Die Signalsender 42 und/oder der Höhenmesser 40 können über eine drahtgebundene Datenkommunikationsverbindung mit der Auswerteeinheit 38 verbunden sein.

Die Signalsender 42 können Signale abstrahlen, deren Stärke von dem Signalstärkesensor 16 gemessen werden kann. Aus den unterschiedlichen Signalstärken kann entweder die Auswerteelektronik 14 des Werkzeugs oder die Auswerteeinheit 38 eine Position des Werkzeugs 10 relativ zum Kabinendach 35 berechnen.

Es ist möglich, dass die Signale der Signalsender 42 Datenkommunikationssignale sind, beispielsweise basierend auf Bluetooth, über die auch eine Datenkommunikationsverbindung mit dem Werkzeug 10 bzw. dessen Auswerteelektronik 12, dem Höhenmesser 40 und/oder dem Höhenmesser 44 hergestellt werden kann.

Die Fig. 3 zeigt schematisch ein Protokollierungs- und Überwachungssystem 46, das aus den in den Fig. 1 und 2 gezeigten Sensoren, Höhenmessern, Auswerteelektroniken, der Auswerteeinheit 38 etc. gebildet ist.

Das System 46 umfasst ein Positionsmesssystem 48, das den Signalstärkesensor 16 am Werkzeug 10, die Signalsender 42 auf dem Kabinendach 35, die Inertialmesseinheit 18 des Werkzeugs 10, den Beschleunigungssensor 24 des Werkzeugs 10, das Gyroskop 26 des Werkzeugs 10 und einen Magnetfeldsensor des Werkzeugs umfassen kann. Weiter umfasst das System 46 ein Höhenmesssystem 50, das den Werkzeug-Höhenmesser 20, den Kabinen-Höhenmesser 40 und/oder den Fahrstuhlschacht-Höhenmesser 44 umfassen kann.

Das Auswertesystem 52 des Gesamtsystems 46 umfasst die Auswerteeinheit 38 und optional eventuell vorhandene Auswerteelektroniken des Werkzeugs 10 oder der Höhenmesser 40, 44.

Das System 46 kann auch den Stromsensor 22 und/oder die Kamera 28 des Werkzeugs 10 umfassen.

Wie in der Fig. 3 gezeigt, können die Komponenten des Systems 46 alle miteinander direkt oder indirekt über eine Datenkommunikationsverbindung 54 verbunden sein.

Die Fig. 4 zeigt ein Verfahren, das von dem System 46 automatisch ausgeführt werden kann.

Im Schritt S10 wird eine Position und optional eine räumliche Orientierung des Werkzeugs 10 relativ zu der Fahrstuhlkabine 34 mit dem Positionsmesssystem 48 gemessen und wird eine Höhe der Fahrstuhlkabine 34 in dem Fahrstuhlschacht 30 mit dem Höhenmesssystem 50 gemessen.

Mit dem Signalstärkesensor 16 werden Signalstärken der Signalsender 42 gemessen und basierend darauf die Position des Werkzeugs 10 relativ zu der Fahrstuhlkabine 34 bestimmt. Die Position kann insbesondere als dreidimensionale Position bzw. als dreidimensionaler Vektor, d.h. als ein Zahlentrippel, berechnet werden.

Weiter kann auch auf den Messdaten des Beschleunigungssensors 24 eine weitere Position des Werkzeugs 10 relativ zu einer vorhergehenden Werkzeugposition ermittelt werden. Die Position des Werkzeugs 10 kann zusammen mit der basierend auf dem Signalstärkesensor 16 ermittelten Position dazu verwendet werden, eine Position des Werkzeugs mit vermindertem Messfehler (beispielsweise durch Mittelwertbildung) zu berechnen.

Eine räumliche Orientierung des Werkzeugs 10 kann beispielsweise mit dem Gyroskop 26 und/oder einem Magnetfeldsensor gemessen werden. Diese räumliche Orientierung kann einen Winkel gegenüber der Horizontalen (Nickwinkel) und/oder einen Drehwinkel gegenüber der Vertikalen (Gierwinkel) umfassen.

Die Höhe der Fahrstuhlkabine 34 in dem Fahrstuhlschacht 30 kann mithilfe der Höhenmesser 40, 44 bestimmt werden. Die beiden Höhenmesser 40, 44 können jeweils einen Luftdrucksensor umfassen und können eine Höhe relativ zur Meereshöhe ermitteln. Aus der Differenz der Werte des Fahrstuhlschacht-Höhenmessers 44 und des Kabinen-Höhenmessers 40 kann (beispielsweise durch Addieren eines bekannten Offsets) die Höhe des Kabinendachs 35 über dem Boden des Fahrstuhlschachts 30 bestimmt werden.

Es ist aber auch möglich, dass der Kabinen-Höhenmesser 40 als Radar- oder Lidar-Abstandsmesser ausgeführt ist und einen Abstand zur Decke des Fahrstuhlschachts ermitteln kann. Aus diesem Abstand (beispielsweise durch Addieren der bekannten Höhe des Fahrstuhlschachts 30) kann die Höhe des Kabinendachs 35 über dem Boden des Fahrstuhlschachts 30 bestimmt werden.

Der Höhenmesser 20 am Werkzeug 10 kann auch einen Luftdrucksensor umfassen. Die Differenz der Werte zwischen dem Werkzeug-Höhenmesser 20 und dem Kabinen-Höhenmesser 40 kann beispielsweise zur Korrektur/Verbesserung der Position des Werkzeugs 10 relativ zu der Fahrstuhlkabine 34 verwendet werden.

Im Schritt S12 wird eine Position und optional eine räumliche Orientierung des Werkzeugs 10 relativ zu dem Fahrstuhlschacht 30 basierend auf den Messdaten bestimmt. Beispielsweise kann die Auswerteeinheit 38 alle von den Sensoren bereitgestellten Messdaten empfangen und dazu weiter auswerten.

Zu der Position relativ zum Kabinendach 35 kann beispielsweise die Höhe des Kabinendachs 35 über dem Schachtboden addiert werden. Auch ein räumlicher (translatorischer) Offset der Koordinatensysteme bezüglich der Fahrstuhlkabine 34 und bezüglich des Fahrstuhlschachts 30 kann hier addiert werden. Beispielsweise kann das Koordinatensystem der Kabine durch die Mitte des Kabinendachs 35 bestimmt sein, während das Koordinatensystem des Fahrstuhlschachts durch eine Bodenecke des Fahrstuhlschachts bestimmt ist.

Genauso ist es möglich, dass ein Winkeloffset zu der räumlichen Orientierung des Werkzeugs addiert wird, um eine räumliche Orientierung des Werkzeugs 10 relativ zum Fahrstuhlschacht 30 bestimmen.

Im Schritt S14 wird aus Messdaten des Stromsensors 22 bestimmt, wann und/oder in welcher Weise das Werkzeug 10 aktiviert worden ist. Beispielsweise kann mit dem Stromsensor 22 erkannt werden, wenn der Monteur einen Schalter des Werkzeugs 10 gedrückt hat. Über die Höhe des Stroms kann beispielsweise auch erkannt werden, wie stark eine Schraube angezogen wurde. Zusätzlich können der Zeitpunkt und die Länge der Aktivierung, beispielsweise mittels einer Uhr der Auswerteeinheit 38, bestimmt werden.

Insgesamt kann das Auswertesystem 52 eine Position und optional die räumliche Orientierung des Werkzeugs 10 im Fahrstuhlschacht 30 ermitteln, bei der das Werkzeug aktiviert worden ist (und beispielsweise zusätzlich den Zeitpunkt und/oder die Dauer der Aktivierung).

Im Schritt S16, beispielsweise basierend auf einer Aktivierung des Werkzeugs 10, wird ein Bild der Kamera 28 von dem Werkzeug 10 an die Auswerteeinheit gesendet. Dieses Bild kann zusammen mit der bei der Aktivierung bestimmten Position gespeichert werden und/oder weiter durch die Auswerteeinheit 38 mittels Bilddatenverarbeitung ausgewertet werden.

Beispielsweise kann von der Auswerteeinheit 38 erkannt werden, ob eine Baukomponente 36 des Fahrstuhlsystems 32 in dem Bild zu erkennen ist, auf die die Kamera 28 gerichtet ist. Zusätzlich kann die Auswerteeinheit 38 auch eine Lage und/oder eine Orientierung der Baukomponente 36 erkennen und mit der ermittelten Position des Werkzeugs 10 abgleichen.

In diesem Fall kann die Auswerteeinheit 38 die Position dieser Baukomponente 36 basierend auf der Position und/oder der Orientierung des Werkzeugs 10 im Fahrstuhlschacht 30 ermitteln. Beispielsweise kann angenommen werden, dass sich die Baukomponente 36 im Koordinatensystem des Werkzeugs 10 an einer bestimmten Position befindet. Diese Position kann mit der Position und/oder der Orientierung des Werkzeugs 10 zu einer Position der Baukomponente 36 im Fahrstuhlschacht 30 umgerechnet werden.

Es ist aber auch möglich, dass (ohne Bilddaten auszuwerten) einfach angenommen wird, dass bei Aktivieren des Werkzeugs 10 eine Baukomponente 36 bearbeitet wird und dann wie eben beschrieben die Position der Baukomponente 36 im Fahrstuhlschacht 30 bestimmt wird.

Basierend auf der Position und/oder einer räumlichen Orientierung des Werkzeugs 10 relativ zum Fahrstuhlschacht 30 und der erkannten Baukomponente 36 bzw. der Position der Baukomponente 36 im Fahrstuhlschacht 30 kann die Auswerteeinheit 38 dann in einem dreidimensionalen Modell 56 (beispielsweise basierend auf einem Konstruktionsplan) des Fahrstuhlsystems 32 eine entsprechende Baukomponente 36 in dem Modell ermitteln. Beispielsweise kann die Baukomponente 36 in einem Volumen, das im Koordinatensystem des Werkzeugs 10 definiert ist, gesucht werden.

Damit kann das Auswertesystem 52 einen Zusammenhang zwischen einer real bearbeiteten Baukomponente 36 und einer Baukomponente in dem Modell 56 herstellen.

Im Schritt S18 kann das Auswertesystem 52 die Position und/oder eine räumliche Orientierung des Werkzeugs 10 relativ zum Fahrstuhlschacht 30, bei der eine Aktivierung des Werkzeugs 10 erfolgt ist, in einer Datei protokollieren. In dieser Datei können auch weitere Informationen, wie etwa eine im Modell 56 an der Position gefundene Baukomponente 36, der Aktivierungszeitpunkt, die Aktivierungsdauer, ein zu diesem Zeitpunkt gemachtes Kamerabild der Kamera 28 usw. zusammen mit der Position gespeichert werden.

Nachdem der Monteur seine Arbeiten abgeschlossen hat, kann das Auswertesystem 52 in einem Schritt S20 das dreidimensionale Fahrstuhlmodell 56 mit den protokollierten Positionen des Werkzeugs 10 vergleichen und ermitteln, ob Baukomponenten 36, bei denen das Werkzeug 10 aktiviert werden sollte, nicht aktiviert wurden. Auf diese Weise kann das Auswertesystem 52 Baukomponenten 36 bestimmen und optional auch in dem Modell 56 visuell anzeigen, in etwa auf einem Bildschirm der Auswerteeinheit 38, die nicht bearbeitet worden sind, aber bearbeitet werden sollten. Auf diese Weise erhält der Monteur eine automatische Unterstützung bei der Überprüfung seiner Arbeit und/oder Warnungen über potentielle Montage- bzw. Wartungsmängel.

Abschließend ist darauf hinzuweisen, dass Begriffe wie "aufweisend", "umfassend" etc. keine anderen Elemente oder Schritte ausschließen und Begriffe wie "eine" oder "ein" keine Vielzahl ausschließen. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. System (46) zum Überwachen und/oder Protokollieren einer Position eines Werkzeugs (10) in einem Fahrstuhlschacht (30), das System (46) umfassend:
ein Positionsmesssystem (48) zum Messen einer Position des Werkzeugs (10) relativ zu einer Fahrstuhlkabine (34);
ein Höhenmesssystem (50) zum Messen einer Höhe der Fahrstuhlkabine (34) in dem Fahrstuhlschacht (30);
ein Auswertesystem (52), das dazu ausgeführt ist, Messdaten von dem Positionsmesssystem (48) und dem Höhenmesssystem (50) zu empfangen und daraus eine Position des Werkzeugs (10) relativ zu dem Fahrstuhlschacht (30) zu bestimmen.

2. System (46) nach Anspruch 1,
wobei das Positionsmesssystem (48) wenigstens drei an unterschiedlichen Positionen an der Fahrstuhlkabine (34) angebrachte Signalsender (42) und einen am Werkzeug (10) angebrachten Signalstärkesensor (16) umfasst;
wobei das Auswertesystem (52) dazu ausgeführt ist, aus den durch den Signalstärkesensor (16) gemessenen Signalstärken der Signalsender (42) die Position des Werkzeugs (10) relativ zu der Fahrstuhlkabine (34) zu bestimmen.

3. System (46) nach Anspruch 2,
wobei die Signalsender (42) auf einem Kabinendach (35) der Fahrstuhlkabine (34) angebracht sind.

4. System (46) nach Anspruch 2 oder 3,
wobei von dem Signalstärkesensor (16) empfangene Signale der Signalsender (42) Radiosignale, Ultraschallsignale, Bluetoothsignale und/oder Infrarotsignale sind.

5. System (46) nach einem der vorhergehenden Ansprüche,
wobei das Positionsmesssystem (48) eine Inertialmesseinheit (18) umfasst, die dazu ausgeführt ist, eine Beschleunigung und/oder eine räumliche Orientierung des Werkzeugs (10) zu bestimmen.
wobei das Auswertesystem (52) dazu ausgeführt ist, basierend auf der Position des Werkzeugs (10) relativ zum Fahrstuhlschacht (30) und der Beschleunigung und/oder der räumlichen Orientierung des Werkzeugs (10) relativ zur Fahrstuhlkabine (34) eine räumliche Orientierung des Werkzeugs (10) relativ zum Fahrstuhlschacht (30) zu bestimmen; und/oder
wobei die Inertialmesseinheit (18) einen Beschleunigungssensor (24) und/oder ein Gyroskop (26) umfasst.

6. System (46) nach einem der vorhergehenden Ansprüche,
wobei das Höhenmesssystem (50) einen Kabinen-Höhenmesser (40) umfasst, der an der Fahrstuhlkabine (34) angebracht ist; und/oder
wobei das Höhenmesssystem (50) einen Schacht-Höhenmesser (44) umfasst, der an dem Fahrstuhlschacht (30) angebracht ist; und/oder
wobei das Höhenmesssystem (50) einen Werkzeug-Höhenmesser (20) umfasst, der an dem Werkzeug (10) angebracht ist.

7. System (46) nach Anspruch 6,
wobei der Kabinen-Höhenmesser (40), der Schacht-Höhenmesser (44) und/oder der Werkzeug-Höhenmesser (20) einen Luftdrucksensor umfassen.

8. System (46) nach einem der vorhergehenden Ansprüche, weiter umfassend:
eine Kamera (28) an dem Werkzeug (10);
wobei das Auswertesystem (52) dazu ausgeführt ist, ein Bild der Kamera (28) auszuwerten und eine Baukomponente (36) eines Fahrstuhlsystems (32) zu erkennen, auf die die Kamera (28) gerichtet ist;

9. System (46) nach Anspruch 8,
wobei das Auswertesystem (52) dazu ausgeführt ist, basierend auf der Position und/oder einer räumlichen Orientierung des Werkzeugs (10) relativ zum Fahrstuhlschacht (30) und der erkannten Baukomponente (36) eine Baukomponente in einem dreidimensionalen Fahrstuhlmodell (56) zu ermitteln;

10. System (46) nach Anspruch 9,
wobei das Auswertesystem (52) dazu ausgeführt ist, aus der ermittelten Baukomponente (36) des Fahrstuhlmodells eine korrigierte Position und/oder räumliche Orientierung des Werkzeugs zu bestimmen.

11. System (46) nach einem der vorhergehenden Ansprüche, weiter umfassend:
einen mit einer Stromversorgung des Werkzeugs (10) verbundenen Stromsensor (22);
wobei das Auswertesystem (52) dazu ausgeführt ist, aus Messdaten des Stromsensors (22) zu bestimmen, wann und/oder in welcher Weise das Werkzeug (10) aktiviert worden ist.

12. System (46) nach einem der vorhergehenden Ansprüche,
wobei das Auswertesystem (52) dazu ausgeführt ist, die Position und/oder eine räumliche Orientierung des Werkzeugs (10) relativ zum Fahrstuhlschacht (30), bei der eine Aktivierung des Werkzeugs (10) erfolgt ist, zu protokollieren.

13. System (46) nach einem der vorhergehenden Ansprüche,
wobei das Auswertesystem (52) dazu ausgeführt ist, ein dreidimensionales Fahrstuhlmodell (56) mit protokollierten Positionen des Werkzeugs (10) zu vergleichen und zu ermitteln, ob Baukomponenten (36), bei denen das Werkzeug (10) aktiviert werden sollte, nicht aktiviert wurde.

14. System (46) nach einem der vorhergehenden Ansprüche,
wobei das Werkzeug (10) ein elektrischer Schraubendreher ist; und/oder
wobei Baukomponenten (36) des Fahrstuhlsystems (32), deren Position und/oder Bearbeitung durch das Werkzeug (10) durch das Auswertesystem (52) protokolliert sind, Schrauben sind.

15. Verfahren zum Überwachen und/oder Protokollieren einer Position eines Werkzeugs (10) in einem Fahrstuhlschacht (30), das Verfahren umfassend:
Messen einer Position des Werkzeugs (10) relativ zu einer Fahrstuhlkabine (34) mit einem Positionsmesssystem (48);
Messen einer Höhe der Fahrstuhlkabine (34) in dem Fahrstuhlschacht (30) mit einem Höhenmesssystem (50);
Bestimmen einer Position des Werkzeugs (10) relativ zu dem Fahrstuhlschacht (30) basierend auf den Messdaten des Positionsmesssystems (48) und des Höhenmesssystems (50) mit einem Auswertesystem (52).

## Claims

1. A system (46) for monitoring and/or recording a position of a tool (10) in an elevator shaft (30), the system (46) comprising:
a position measuring system (48) for measuring a position of the tool (10) relative to an elevator car (34);
a height measuring system (50) for measuring a height of the elevator car (34) in the elevator shaft (30);
an evaluation system (52) that is designed to receive measured data from the position measuring system (48) and the height measuring system (50) and to determine therefrom a position of the tool (10) relative to the elevator shaft (30).

2. The system (46) according to claim 1,
wherein the position measuring system (48) comprises at least three signal transmitters (42) that are attached to the elevator car (34) at different positions, and a signal strength sensor (16) that is attached to the tool (10);
wherein the evaluation system (52) is designed to determine the position of the tool (10) relative to the elevator car (34) from the signal strengths of the signal transmitters (42) measured by the signal strength sensor (16).

3. The system (46) according to claim 2,
wherein the signal transmitters (42) are attached to a car roof (35) of the elevator car (34).

4. The system (46) according to either claim 2 or claim 3,
wherein signals of the signal transmitter (42) that are received by the signal strength sensor (16) are radio signals, ultrasound signals, Bluetooth signals and/or infrared signals.

5. The system (46) according to any of the preceding claims,
wherein the position measuring system (48) comprises an inertial measurement unit (18) that is designed to determine an acceleration and/or a spatial orientation of the tool (10).
wherein the evaluation system (52) is designed to determine a spatial orientation of the tool (10) relative to the elevator shaft (30), on the basis of the position of the tool (10) relative to the elevator shaft (30) and the acceleration and/or the spatial orientation of the tool (10) relative to the elevator car (34); and/or
wherein the inertial measurement unit (18) comprises an acceleration sensor (24) and/or a gyroscope (26).

6. The system (46) according to any of the preceding claims,
wherein the height measuring system (50) comprises a car height measuring device (40) that is attached to the elevator car (34); and/or
wherein the height measuring system (50) comprises a shaft height measuring device (44) that is attached to the elevator shaft (30); and/or
wherein the height measuring system (50) comprises a tool height measuring device (20) that is attached to the tool (10).

7. The system (46) according to claim 6,
wherein the car height measuring device (40), the shaft height measuring device (44) and/or the tool height measuring device (20) comprise an air pressure sensor.

8. The system (46) according to any of the preceding claims, further comprising:
a camera (28) on the tool (10);
wherein the evaluation system (52) is designed to evaluate an image of the camera (28) and to recognize a construction component (36) of an elevator system (32) towards which the camera (28) is directed;

9. The system (46) according to claim 8,
wherein the evaluation system (52) is designed to identify a construction component in a three-dimensional elevator model (56), on the basis of the position and/or a spatial orientation of the tool (10) relative to the elevator shaft (30) and the recognized construction component (36).

10. The system (46) according to claim 9,
wherein the evaluation system (52) is designed to determine a corrected position and/or spatial orientation of the tool from the identified construction component (36) of the elevator model.

11. The system (46) according to any of the preceding claims, further comprising:
a current sensor (22) that is connected to a power supply of the tool (10);
wherein the evaluation system (52) is designed to determine, from measured data of the current sensor (22), when and/or in what way the tool (10) has been activated.

12. The system (46) according to any of the preceding claims,
wherein the evaluation system (52) is designed to record the position and/or a spatial orientation of the tool (10) relative to the elevator shaft (30) at which the tool (10) has been activated.

13. The system (46) according to any of the preceding claims,
wherein the evaluation system (52) is designed to compare a three-dimensional elevator model (56) with recorded positions of the tool (10) and to identify if construction components (36) at which the tool (10) should be activated were not activated.

14. The system (46) according to any of the preceding claims,
wherein the tool (10) is an electric screwdriver; and/or
wherein construction components (36) of the elevator system (32), the position of which and/or the working of which by the tool (10) are recorded by the evaluation system (52), are screws.

15. A method for monitoring and/or recording a position of a tool (10) in an elevator shaft (30), the method comprising:
measuring a position of the tool (10) relative to an elevator car (34) using a position measuring system (48);
measuring a height of the elevator car (34) in the elevator shaft (30) using a height measuring system (50);
determining a position of the tool (10) relative to the elevator shaft (30) on the basis of the measured data of the position measuring system (48) and of the height measuring system (50) using an evaluation system (52).

## Revendications

1. Système (46) de surveillance et/ou d'enregistrement d'une position d'un outil (10) dans une cage d'ascenseur (30), le système (46) comprenant :
un système de mesure de position (48) pour mesurer une position de l'outil (10) par rapport à une cabine d'ascenseur (34) ;
un système de mesure de hauteur (50) pour mesurer une hauteur de la cabine d'ascenseur (34) dans la cage d'ascenseur (30) ;
un système d'évaluation (52) conçu pour recevoir des données de mesure du système de mesure de position (48) et du système de mesure de hauteur (50) et pour déterminer, à partir de ceux-ci, une position de l'outil (10) par rapport à la cage d'ascenseur (30).

2. Système (46) selon la revendication 1,
dans lequel le système de mesure de position (48) comprend au moins trois émetteurs de signaux (42) montés sur la cabine d'ascenseur (34) à des positions différentes et un capteur de force de signal (16) monté sur l'outil (10) ;
dans lequel le système d'évaluation (52) est conçu pour déterminer la position de l'outil (10) par rapport à la cabine d'ascenseur (34) à partir des forces de signal des émetteurs de signal (42) mesurées par le capteur de force de signal (16).

3. Système (46) selon la revendication 2,
dans lequel les émetteurs de signaux (42) sont montés sur un toit (35) de la cabine d'ascenseur (34).

4. Système (46) selon la revendication 2 ou 3,
dans lequel les signaux des émetteurs de signal (42) reçus du capteur de force de signal (16) sont des signaux radio, des signaux ultrasoniques, des signaux Bluetooth et/ou des signaux infrarouges.

5. Système (46) selon l'une des revendications précédentes,
dans lequel le système de mesure de position (48) comprend une unité de mesure inertielle (18) conçue pour déterminer une accélération et/ou une orientation spatiale de l'outil (10).
dans lequel le système d'évaluation (52) est conçu pour déterminer une orientation spatiale de l'outil (10) par rapport à la cage d'ascenseur (30) sur la base de la position de l'outil (10) par rapport à la cage d'ascenseur (30) et de l'accélération et/ou de l'orientation spatiale de l'outil (10) par rapport à la cabine d'ascenseur (34) ; et/ou
dans lequel l'unité de mesure inertielle (18) comprend un capteur d'accélération (24) et/ou un gyroscope (26).

6. Système (46) selon l'une des revendications précédentes,
dans lequel le système de mesure de hauteur (50) comprend un altimètre de cabine (40) monté sur la cabine d'ascenseur (34) ; et/ou
dans lequel le système de mesure de hauteur (50) comprend un altimètre de cage (44) monté sur la cage d'ascenseur (30) ; et/ou
dans lequel le système de mesure de hauteur (50) comprend un altimètre d'outil (20) monté sur l'outil (10).

7. Système (46) selon la revendication 6,
dans lequel l'altimètre de cabine (40), l'altimètre de cage (44) et/ou l'altimètre d'outil (20) comprennent un capteur de pression atmosphérique.

8. Système (46) selon l'une des revendications précédentes, comprenant en outre :
une caméra (28) sur l'outil (10) ;
dans lequel le système d'évaluation (52) est conçu pour évaluer une image de la caméra (28) et pour reconnaître un composant structurel (36) d'un système d'ascenseur (32) vers lequel la caméra (28) est dirigée ;

9. Système (46) selon la revendication 8,
dans lequel le système d'évaluation (52) est conçu pour déterminer un composant structurel dans un modèle tridimensionnel d'ascenseur (56) sur la base de la position et/ou d'une orientation spatiale de l'outil (10) par rapport à la cage d'ascenseur (30) et du composant structural reconnu (36) ;

10. Système (46) selon la revendication 9,
dans lequel le système d'évaluation (52) est conçu pour déterminer une position et/ou une orientation spatiale corrigée de l'outil à partir du composant structurel déterminé (36) du modèle d'ascenseur.

11. Système (46) selon l'une des revendications précédentes, comprenant en outre :
un capteur de courant (22) relié à une alimentation électrique de l'outil (10) ;
dans lequel le système d'évaluation (52) est conçu pour déterminer, à partir de données de mesure du capteur de courant (22), à quel moment et/ou de quelle manière l'outil (10) a été activé.

12. Système (46) selon l'une des revendications précédentes,
dans lequel le système d'évaluation (52) est conçu pour enregistrer la position et/ou une orientation spatiale de l'outil (10) par rapport à la cage d'ascenseur (30) dans laquelle une activation de l'outil (10) a eu lieu.

13. Système (46) selon l'une des revendications précédentes,
dans lequel le système d'évaluation (52) est conçu pour comparer un modèle d'ascenseur tridimensionnel (56) avec des positions enregistrées de l'outil (10) et pour déterminer si les composants structurels (36) dans lesquels l'outil (10) doit être activé n'ont pas été activés.

14. Système (46) selon l'une des revendications précédentes,
dans lequel l'outil (10) est un tournevis électrique ; et/ou
dans lequel les composants structurels (36) du système d'ascenseur (32), dont la position et/ou l'usinage par l'outil (10) sont enregistrés par le système d'évaluation (52), sont des vis.

15. Procédé de surveillance et/ou d'enregistrement d'une position d'un outil (10) dans une cage d'ascenseur (30), le procédé comprenant :
la mesure d'une position de l'outil (10) par rapport à une cabine d'ascenseur (34), au moyen d'un système de mesure de position (48) ;
la mesure d'une hauteur de la cabine d'ascenseur (34) dans la cage d'ascenseur (30), au moyen d'un système de mesure de hauteur (50) ; et
la détermination, au moyen d'un système d'évaluation (52), d'une position de l'outil (10) par rapport à la cage d'ascenseur (30) sur la base des données de mesure du système de mesure de position (48) et du système de mesure de hauteur (50).
